# EUROPEAN PATENT APPLICATION

(11) **EP 3 159 317 A1**
(43) Date of publication of application: **26.04.2017**
(21) Application number: 15809527.3
(22) Date of filing: 16.06.2015
(51) Int. Cl.: C03C 17/22, C03B 18/02, C03C 15/00, G06F 3/041

(54) **GLASS PLATE AND METHOD FOR MANUFACTURING SAME**

(30) Priority: 20.06.2014 JP 2014127268
(71) Applicant: Asahi Glass Company, Limited, Tokyo 100-8405 (JP)
(72) Inventor: SERA Yoichi, Tokyo 100-8405 (JP); AKIYAMA Ryoji, Tokyo 100-8405 (JP); KAWAKAMI Masamichi, Tokyo 100-8405 (JP); TANII Shiro, Tokyo 100-8405 (JP); NAKANO Katsuyuki, Tokyo 100-8405 (JP); AKIE Daiki, Tokyo 100-8405 (JP); KISHIKAWA Noriko, Tokyo 100-8405 (JP)
(74) Representative: Müller-Boré & Partner Patentanwälte PartG mbB
(86) International application number: PCT/JP2015/067360
(87) International publication number: WO 2015/194569

(57) **Abstract**

The glass plate according to the present invention has a buffer layer containing a plurality of sulfate crystals on a bottom surface which is brought into contact with a molten metal during formation in accordance with a float method, and the plurality of sulfate crystals have a median value of equivalent circle diameters of 350 nm or smaller as observed from a thickness direction.

## Description

### TECHNICAL FIELD

The present invention relates to a glass plate and a manufacturing method thereof.

### BACKGROUND ART

In recent years, in flat panel display devices such as a mobile phone, a smart phone, a tablet terminal, a personal computer, a television receiver, and a car-mounted navigation system display devices, a sheet of thin plate glass is disposed as a cover glass on the front surface of a display so as to cover an area wider than the area of an image display portion of the display device for the purpose of protecting and enhancing beauties of the display devices.

Such a conventional glass plate is manufactured by using, for example, a method referred to as a float method. At the time of manufacturing glass plates in accordance with a float method, use has been made of a glass manufacturing apparatus containing a melting furnace for melting a raw material of glass, a float bath for making the molten glass float on a molten metal (e.g. tin) to form a glass ribbon, and a annealing furnace for annealing the glass ribbon.

Therein, the bottom surface of the glass is supported by conveying means such as rollers, during the conveyance of the glass ribbon from the float bath into the annealing furnace, during the conveyance inside of the annealing furnace, during the conveyance from the annealing furnace to the downstream, and so on. During such conveyance, there are cases in which the bottom surface of the glass ribbon is damaged by the conveying means. Therefore techniques by which the occurrence of such damage can be prevented by the use of various methods have so far been proposed.

For example, in the invention disclosed in Patent Document 1, a gas for forming a protective film is blown on a ribbon-shaped glass substance being on the manufacturing line at the exit of a forming furnace, at the entrance of a annealing furnace or in the interior of the annealing furnace, which are provided in the manufacturing line of float sheet glass. Thereby, the protective film for preventing the glass substance from being damaged is formed. Additionally, as examples of a salt constituting the protective film, sulfates and carbonates are disclosed.

### PRIOR ART DOCUMENTS

### PATENT DOCUMENT

[Patent Document 1] WO 2002/051767

### SUMMARY OF THE INVENTION

### PROBLEMS THAT THE INVENTION IS TO SOLVE

By the way, in some cases, glass plates manufactured by being cut in desired sizes after annealing are subjected to etching treatment by using an aqueous solution containing hydrofluoric acid (HF) for the purposes of removing their surface layers, carrying out on-board wiring and so on.

However, when the glass plate which has thereon a protective film formed of a sulfate as in the case of the glass plate disclosed in Patent Document 1 is washed to remove the protective film and then subjected to etching treatment using hydrofluoric acid, there occurs a phenomenon that the glass surface scatters visible light and becomes whitely clouded (which phenomenon is referred to as "white cloudiness" hereafter). Occurrence of such white cloudiness not only impairs the beauty of glass plate but also exacerbates the visibility of a display.

The present invention has been made in view of the foregoing problem, and an object thereof is to provide a glass plate capable of inhibiting the occurrence of the white cloudiness even after undergoing etching treatment.

### MEANS FOR SOLVING THE PROBLEMS

The present inventors have found a correlation between shapes of sulfate crystals forming a buffer layer and shapes of recesses formed after the etching treatment which is a cause of the white cloudiness, and on the basis of this finding they have completed the present invention.

More specifically, the present invention includes the followings.
(1) A glass plate having a buffer layer containing a plurality of sulfate crystals on a bottom surface which is brought into contact with a molten metal during formation in accordance with a float method,
   in which the plurality of sulfate crystals have a median value of equivalent circle diameters of 350 nm or smaller as observed from a thickness direction.
(2) A glass plate having a plurality of altered areas higher in etching rate than other portions on a bottom surface which is brought into contact with a molten metal during formation in accordance with a float method,
   in which the plurality of altered areas have a median value of equivalent circle diameters of 400 nm or smaller as observed from a thickness direction.
(3) A method for manufacturing a glass plate, which contains a process of forming a buffer layer containing a plurality of sulfate crystals on a bottom surface which is brought into contact with a molten metal during formation in accordance with a float method,
   in which the plurality of sulfate crystals have a median value of equivalent circle diameters of 350 nm or smaller as observed from a thickness direction.
(4) The method for manufacturing a glass plate according to (3), further containing a process of washing the bottom surface to remove the buffer layer,
   in which the bottom surface has a plurality of altered areas higher in etching rate than other portions and
   the plurality of altered areas have a median value of equivalent circle diameters of 400 nm or smaller as observed from the thickness direction.
(5) The method for manufacturing a glass plate according to (4), further containing a process of etching the bottom surface by an aqueous solution containing hydrofluoric acid,
   in which the bottom surface has an arithmetic mean roughness of 1.1 nm or smaller and a maximum valley depth of 7.0 nm or smaller.

### ADVANTAGEOUS EFFECTS OF THE INVENTION

Because the present glass plate is 350 nm or smaller in a median value of equivalent circle diameters of a plurality of sulfate crystals as observed from the thickness direction, equivalent circle diameters of recesses formed in the surface become minute even after undergoing etching treatment. Thus scattering of visible light by the recesses becomes difficult to occur, and it becomes possible to inhibit occurrence of white cloudiness.

### BRIEF DESCRIPTION OF THE DRAWINGS

[FIG. 1] FIG. 1 is a schematic diagram illustrating a glass plate manufacturing apparatus.
[FIG. 2] (a) to (e) of FIG. 2 are diagrams illustrating a mechanism where a buffer layer and altered areas are formed.
[FIG. 3] FIG. 3 is a diagram illustrating a glass plate after removal of the buffer layer.
[FIG. 4] FIG. 4 is a diagram illustrating a glass plate after etching treatment.
[FIG. 5] FIG. 5 includes photomicrographs showing the bottom surfaces on which buffer layers are formed.
[FIG. 6] FIG. 6 is a graph showing a relationship between S count and arithmetic mean roughness Sa.
[FIG. 7] FIG. 7 is a graph showing a relationship between S count and maximum valley depth V.
[FIG. 8] FIG. 8 is a graph showing a relationship between median value of equivalent circle diameters of a plurality of sulfate crystals and median value of equivalent circle diameters of a plurality of altered areas.

### MODE FOR CARRYING OUT THE INVENTION

The term "glass plate" used in the present invention is intended to include substances obtained by molding molten glass into the form of a plate, and for example, the so-called glass ribbon within a float bath is also glass plate.

Typical examples of a glass plate usable in the present invention include glass plates formed of soda lime silicate glass, aluminosilicate glass, borate glass, lithium aluminosilicate glass, and borosilicate glass.

### <Composition>

As for compositions of the glass plate of the present invention, mention may be made of glass containing, with composition expressed in percentage by mole, from 50% to 80% of SiO₂, from 0.1% to 25% of Al₂O_{3,} from 0% to 10% of B₂O₃, from 3% to 30% of Li₂O + Na₂O + K₂O, from 0% to 25% of MgO, from 0% to 25% of CaO, and from 0% to 5% of ZrO₂, but it is not limited in particular. More specifically, the following glass compositions can be given. Incidentally, the expression of, for example, "contains from 0% to 25% of MgO" used above means that MgO is not essential but may be contained up to 25%.
(i) Glass containing, with composition expressed in percentage by mole, from 63% to 73% of SiO₂, from 0.1% to 25% of Al₂O₃, from 10% to 20% of Na₂O, from 0% to 1.5% of K₂O, from 5% to 13% of MgO, and from 4% to 10% of CaO.
(ii) Glass containing, with composition expressed in percentage by mole, from 50% to 74% of SiO_{2,} from 1% to 25% of Al₂O_{3,} from 6% to 14% of Na₂O, from 3% to 11% of K₂O, from 2% to 15% of MgO, from 0% to 6% of CaO, and from 0% to 5 % of ZrO₂, provided that the total of SiO₂ and Al₂O₃ contents is 75% or lower, the total of Na₂O and the K₂O contents is from 12% to 25% and the total of MgO and CaO contents is from 7% to 15%.
(iii) Glass containing, with composition expressed in percentage by mole, from 68% to 80% of SiO₂, from 4% to 25% of Al₂O₃, from 5% to 16% of Na₂O, from 0% to 1% of K₂O, from 4% to 15% of MgO, and from 0% to 1% of ZrO₂.
(iv) Glass containing, with composition expressed in percentage by mole, from 63% to 75% of SiO₂, from 2% to 12% of Al₂O₃, from 5% to 15% of MgO, from 0.5% to 10% of CaO, from 0% to 3% of SrO, from 0% to 3% of BaO, from 10% to 18% of Na₂O, from 0% to 8% of K₂O, from 0% to 3 % of ZrO₂, and from 0.003% to 0.1% of Fe₂O₃, provided that R₂O/Al₂O₃ (in the formula, R₂O is Na₂O+K₂O) is 3.0 or more and 7.0 or less.

SiO₂ is known as a constituent forming a network structure in the microstructure of glass, and is a primary constituent of glass. The suitable content for SiO₂ is described below, in which mole% is expressed simply as %. The SiO₂ content is 50% or higher, preferably 63% or higher, and further preferably 64% or higher. And the SiO₂ content is 80% or lower, preferably 75% or lower, further preferably 74% or lower, and particularly preferably 73% or lower. The SiO₂ content of 50% or higher is superior in stability and weather resistance as glass. In addition, the formation of a network structure makes it possible to inhibit an increase in expansion. On the other hand, the SiO₂ content of 80% or lower is superior in fusibility and formability.

Al₂O₃ has the property of enhancing ion exchangability in chemical toughening, and has a great effect on enhancement of surface compressive stress in particular. Al₂O₃ is also known as a constituent allowing an increase in weather resistance of glass. In addition, Al₂O₃ has the property of inhibiting invasion by tin from the bottom surface during the formation in accordance with a float method. Furthermore, it has the property of promoting dealkalization at the time of performing SO₂ treatment.

The suitable content of Al₂O₃ is described below, in which mole% is expressed simply as %. The Al₂O₃ content is 0.1 % or higher, preferably 2% or higher, further preferably 2.5% or higher, and still further preferably 4% or higher. The Al₂O₃ content is also 25% or lower, and preferably 12% or lower. In the case where the Al₂O₃ content is 2.5% or higher, a desired value of surface compressive stress can be attained through ion exchange, and in addition, the effect where invasion by tin from the surface in contact with a molten-tin bath (bottom surface) in a float method is inhibited to thereby make it difficult to cause a warp of glass at the time of chemical toughening, the effect of stability against fluctuations in moisture content and the effect of promoting dealkalization can be attained. On the other hand, the Al₂O₃ content of 25% or lower is superior in fusion and formation in accordance with a float method because an increase in devitrification temperature is not large even in the case where the viscosity of glass is high.

Li₂O+Na₂O+K₂O that is the total of Li₂O, Na₂O and K₂O contents, is preferably from 3% to 30%, further preferably from 5% to 30%, and still further preferably from 7% to 30% as expressed in percentage by mole. In the case where Li₂O+Na₂O+K₂O is in the above-mentioned range, a buffer layer containing a plurality of sulfate crystals becomes easy to be formed on the glass surface.

### <Manufacturing Method>

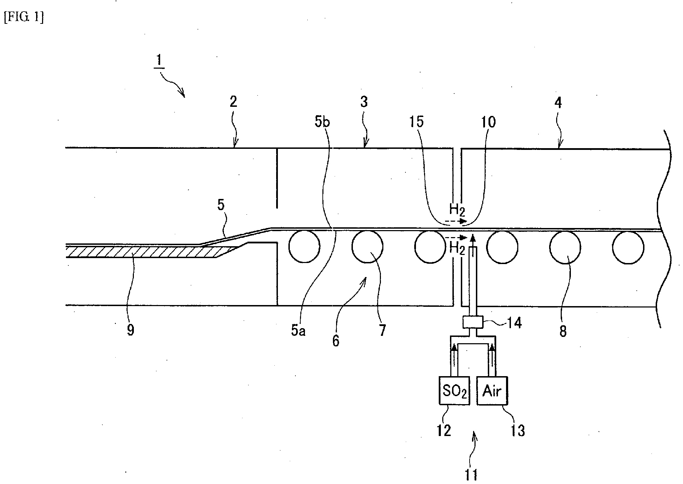

The glass plate according to the present invention is manufactured by using a glass plate manufacturing apparatus 1 as illustrated in FIG. 1 in accordance with a float method. The glass plate manufacturing apparatus 1 contains a float bath 2 on the bottom of which a molten metal 9 such as tin, is stored, a dross box 3 which forms the outlet section of the float bath 2, and a annealing furnace 4 (a lehr) disposed on the downstream side of the dross box 3. The interior of the float bath 2 (the dross box 3) is filled with atmospheres of N₂ and H₂, and is under a pressure higher than atmospheric pressure. In addition, the interior of the annealing furnace 4 is filled with an atmosphere of air.

A glass ribbon 5 formed on the bathing face of the molten metal 9 in the float bath 2 is conveyed downstream by means of conveying tools 6 disposed inside the dross box 3 and inside the annealing furnace 4. The conveying tools 6 include two or more lift-out rollers 7 disposed inside the dross box 3 and two or more lehr rollers 8 disposed inside the annealing furnace 4. Hereafter, of a pair of surfaces of the glass ribbon 5, opposite to each other in the thickness direction, the surface supported by the lift-out rollers 7 and the lehr rollers 8 is represented as the bottom surface 5a, and the other surface is represented as the top surface 5b.

In addition, the glass plate manufacturing apparatus 1 has a buffer-layer formation device 11 for feeding SO₂ and air to the bottom surface 5a of the glass ribbon 5 at the upstream end in the interior of the annealing furnace 4, that is, in a portion between the inlet 10 of the annealing furnace 4 and the lehr roller 8 located on the most upstream side.

The buffer-layer formation device 11 contains an SO₂ feed section 12 and an air feed section 13. The SO₂ gas fed from the SO₂ feed section 12 and the air fed from the air feed section 13 are mixed together, heated up to a predetermined temperature by means of a preheater 14, and then fed to the bottom surface 5a of the glass ribbon 5.

The reason for feeding not only SO₂ gas but also feeding air in combination is because, as described in detail hereafter, it conduces to an increase in the nucleation speed of a sulfate salt to be formed on the bottom surface 5a, thereby promoting the formation of polynucleated sulfate crystals and reducing sizes of individual sulfate crystals. Even when O₂ gas is fed in place of air, similar effects can be produced, and hence an O₂ feed section may be provided in place of the air feed section 13.

Furthermore, on the side of downstream from the buffer-layer formation device 11, at least one other buffer-layer formation device (a downstream-sided buffer-layer formation device), though not illustrated in FIG. 1, may be provided inside the annealing furnace 4. Such a downstream-sided buffer-layer formation device may be configured to feed both SO₂ gas and air (O₂ gas) to the bottom surface 5a as in the case of the most upstream buffer-layer formation device 11, or it may be configured to feed only SO₂ gas to the bottom surface 5a.

### <Formation Mechanisms of Buffer Layer and Altered Areas>

On the bottom surface 5a to which a gas mixture of SO₂ and air is fed as mentioned above, a buffer layer containing a plurality of sulfate crystals is formed, and thereby it is prevented from being damaged by lehr rollers 8. In the followings are illustrated a mechanism by which the buffer layer is formed and a mechanism by which altered areas are formed in the bottom surface 5a through the formation of the buffer layer.

As mentioned above, the interior of the dross box 3 is filled with atmospheres of N₂ and H₂, and is under a pressure higher than atmospheric pressure. As a result, N₂ and H₂ gases blow out from the outlet 15 for conveyance of the glass ribbon 5 to the downstream direction, and are fed into the annealing furnace 4. The H₂ gas of them reacts with O₂ gas present in the annealing furnace 4 to form H₂O.

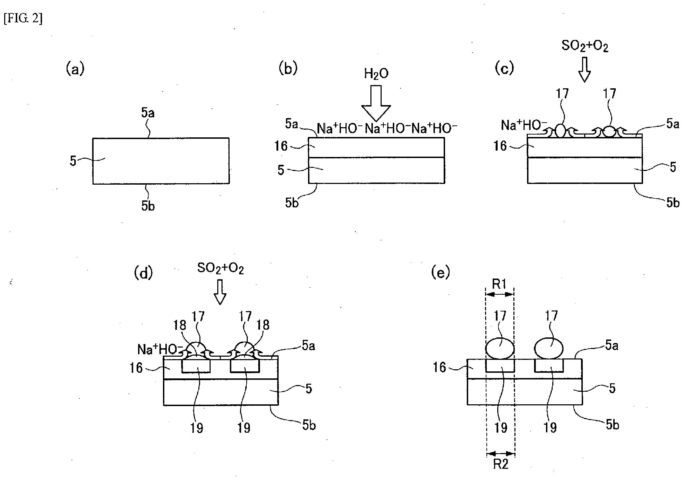

As illustrated in (a) and (b) of FIG. 2, the H₂O reacts with the glass ribbon 5 to form a so-called tarnish layer. While the case where the tarnish layer 16 is formed on the bottom surface 5a is illustrated in (b) of FIG. 2, another tarnish layer is actually formed on the top surface 5b as well. The tarnish layer 16 is a layer formed through the ion exchange occurring between cations (e.g. Na⁺) in the glass ribbon 5 and proton (H⁺) in water.

In the next place, as illustrated in (c) of FIG. 2, a gas mixture of SO₂ and air (O₂) is fed to the bottom surface 5a and undergoes neutralization reaction with alkali ions (e.g. Na⁺) at the surface, and then, a plurality of sulfate crystals 17 such as Na₂SO₄ crystals are formed.

At that time, as illustrated in (d) of FIG. 2, Na⁺ and OH⁻ gather about the sulfate crystals 17 to make the salt grow. At this time, un-neutralized Na⁺ and OH⁻ are present in the form of an intermediately-formed salt 18 between sulfate crystals 17 and the bottom surface 5a (the tarnish layer 16). And the bottom surface 5a undergoes alkali melting by the intermediately-formed salt 18 containing an alkali ingredient to form altered areas 19 different in properties from the other portion.

Then, as illustrated in (e) of FIG. 2, the reaction on the bottom surface 5a is finished at the conclusion of feeding of the gas mixture of SO₂ and air (O₂) (e.g., at the time of being conveyed downstream from the annealing furnace 4). As a result, at the bottom surface 5a are formed a buffer layer containing a plurality of sulfate crystals 17 and a plurality of altered areas 19 in shapes corresponding to the shapes of the plurality of sulfate crystals 17. Hence it follows that, viewed from the thickness direction of the glass ribbon 5 (the vertical direction in (e) of FIG. 2), the diameter R1 of each sulfate crystal 17 and the diameter R2 of the corresponding altered area 19 become almost equal. In this way, the buffer layer containing a plurality of sulfate crystals 17 is formed on the bottom surface 5a, and therefore it becomes possible to prevent the occurrence of damages due to lehr rollers 8.

### <Etching Treatment>

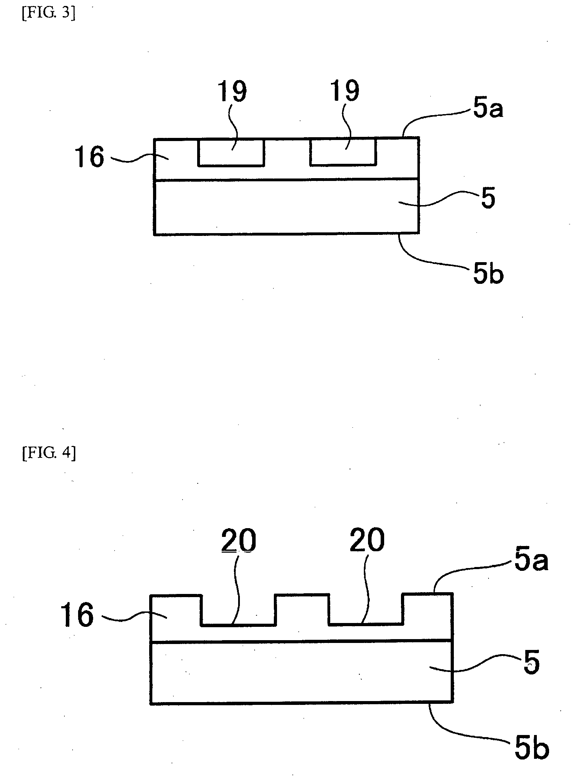

The glass ribbon 5 having the buffer layer formed on the bottom surface 5a in the foregoing manner is cut into desired sizes after annealing, thereby producing glass plates. There are cases where, for the purpose of removing surface layers thereof, carrying out on-board wiring and so on, the glass plates are subjected to etching treatment using an aqueous solution containing hydrofluoric acid (HF) after their buffer layers are removed by washing as illustrated in FIG. 3. An example of a method for washing (removing) the buffer layer and an example of a method for etching the bottom surface 5a are mentioned below.

### (Method for Washing Buffer Layer)

The buffer layer is removed by, for example, washing with pure water at ordinary temperature.

### (Method for Etching on Bottom Surface)

While a method for etching on the bottom surface 5a varies greatly depending on the amount and purpose of etching, in general, etching with an aqueous solution containing HF and HCl is frequently adopted. And an aqueous solution containing from 0.1% to 10% of HF and from 0% to 18% of HCl is used in practice.

With this being the situation, the plurality of altered areas 19 formed in the bottom surface 5a are damaged from the intermediately-formed salt 18, and hence they are higher in rate of etching with hydrofluoric acid than the other portion. Consequently, when the etching treatment is carried out, recesses 20 reflecting the shapes of altered areas 19 are formed in the bottom surface 5a as illustrated in FIG. 4. In other words, there is a correlation among the shapes of the recesses 20 formed after carrying out the etching treatment, the shapes of the altered areas 19 and the shapes of the sulfate crystals 17 with one another.

As the recesses 20 are increased in their sizes, scattering of visible light therefrom becomes easy to occur and the bottom surface 5a is therefore apt to become whitely clouded. Therefore, it is appropriate for prevention of the white cloudiness that the recesses 20 be adjusted to have small sizes, especially sizes below the wavelengths of visible light. In order to reduce sizes of the recesses 20, it is appropriate that the sulfate crystals 17 be made small to make the altered areas 19 formed beneath the respective crystals 17 be also small. However, with only the retardation of the growth of the sulfate crystals 17 through reduction in feed rate of SO₂, the total amount of the crystals 17 to form a buffer layer is reduced, and thereby the buffer layer becomes insufficient in damage resistance. Thus, there is a fear of occurrence of damage to the bottom surface 5a.

Under these circumstances, the present inventors have found that when large amounts of SO₂ and air (O₂) are fed for a short time after forming a tarnish layer 16 in the bottom surface 5a, sizes of sulfate crystals 17 can be reduced to inhibit white cloudiness from occurring after etching and as well, damage resistance of the buffer layer can be maintained.

### <S Count>

For attainment of buffer layer damage resistance, it is require that the total amount of sulfate crystals 17 on the bottom surface 5a be adjusted at a certain specific value or greater. As an indicator of the total amount of sulfate crystals 17, the peak intensity of S-Kα measured with an X-ray fluorescence spectrometer is suitable. As the X-ray fluorescence spectrometer, ZSX100e manufactured by Rigaku Corporation was used, and the peak intensity of S-Kα was measured under measurement conditions listed in Table 1.

**[Table 1]**

| Output | Rh 50kV-60mA |
|---|---|
| Filter | OUT |
| attenuator | 1/1 |
| Spectroscopic crystal | Ge |
| Slit | S4 (corresponding to standard) |
| Detector | PC |
| Peak | 110.73 (40 sec) |
| B.G.1 | 109 (10 sec) |
| B.G.2 | 112.5 (10 sec) |
| Measured diameter | 30 mm φ |

The value obtained by subtracting the peak intensity of S-Kα of the bottom surface 5a on which sulfate crystals 17 were not formed from the peak intensity of S-Kα of the bottom surface 5a on which sulfate crystals 17 were formed is defined as "S count". Herein, for the purpose of ensuring buffer layer damage resistance, the S count is preferably 6 kcps or higher, further preferably 7 kcps or higher, still further preferably 7.5 kcps or higher, and particularly preferably 8 kcps or higher.

### <Arithmetic Mean Roughness Sa and Maximum Valley Depth V>

In addition, in order to inhibit white cloudiness from occurring through the formation of recesses 20 after etching treatment, it becomes essential for the recesses 20 to be reduced in their sizes. Thus the arithmetic mean roughness Sa of the bottom surface 5a after etching treatment is preferably 1.1 nm or smaller, further preferably 1.0 nm or smaller, and still further preferably 0.95 nm or smaller. As far as the arithmetic mean roughness Sa of the bottom surface 5a is 1.1 nm or smaller, the sizes of recesses 20 also become minute, and white cloudiness does not occur in the bottom surface 5a. In addition, the maximum valley depth V of the bottom surface 5a after etching treatment is preferably 7.0 nm or smaller, further preferably 6.0 nm or smaller, and still further preferably 5.5 nm or smaller. As far as the maximum valley depth V of the bottom surface 5a is 7.0 nm or smaller, sizes of the recesses 20 also become minute, and white cloudiness does not occur in the bottom surface 5a.

Such arithmetic mean roughness Sa and maximum valley depth V of the bottom surface 5a are measured by, for example, using VertScan (registered trademark) 2.0 (Model R5500HM) manufactured by Ryoka Systems Inc. under conditions that a 50X objective lens is used and Phase mode is adopted.

### <Equivalent Circle Diameters R1 and R2>

Once the median value of equivalent circle diameters R1 of a plurality of sulfate crystals 17 observed from the direction of glass thickness has been adjusted to become 350 nm or smaller, the median value of equivalent circle diameters R2 of a plurality of altered areas 19 will become 400 nm or smaller, and sizes of recesses 20 formed after etching treatment will be made small. Thus it becomes possible to adjust the arithmetic mean roughness Sa and maximum valley depth V of the bottom surface 5a after etching treatment to 1.1 nm or smaller and 7.0 nm or smaller, respectively. The term "equivalent circle diameter" as used herein means the diameter of a circle having the same area as the projected area of an object (a crystal 17 or an altered area 19), and is referred to as a so-called Heywood diameter.

The median value of equivalent circle diameters R1 of a plurality of sulfate crystals 17 is determined by performing image analysis of SEM images that is obtained by observing the bottom surface 5a under a scanning electron microscope (SEM). More specifically, a sulfate portion is sampled, and the equivalent circle diameters R1 of crystals 17 within a visual field under observation are worked out. At this time, the visual field is defined to contain at least 50 sulfate salts. By the use of image analysis software, such as image analysis and instrumentation software WinROOF produced by MITANI CORPORATION, and by the use of the area of each sulfate salt, the equivalent circle diameter R1 can be calculated in accordance with the expression: Equivalent circle diameter = 2√(area/π).

On the other hand, direct determination of a equivalent circle diameter R2 of each altered area 19 is difficult to perform, and therefore etching treatment is carried out under conditions mentioned below, then measurements under an atomic force microscope (AFM) are carried out, and the equivalent circle diameter R2 of each of detected recesses 20 is determined by the same method as used in determination of the equivalent circle diameter R1 of each crystal 17.

### (Etching Condition)

As an etching solution, a mixed solution containing 0.25% of HF and 0.7% of HCl was used. And ultrasonic etching at 100 kHz was carried out for 10 seconds at room temperature.

### EXAMPLE

Examples according to the present invention are illustrated below in detail, but the present invention should not be construed as being limited to them.

In the examples, glass plate made from a glass material having the following composition was used:
Glass plate containing, expressed in percentage by mole, 64.2% of SiO₂, 8.0% of Al₂O₃, 12.5% of Na₂O, 4.0% of K₂O, 10.5% of MgO, 0.1% of CaO, 0.1% of SrO, 0.1% of BaO, and 0.5% of ZrO₂.

By the use of a buffer-layer formation device 11, SO₂ and air were fed at their respective feed rates as shown in Table 2 to the bottom surface 5a of each glass ribbon 5 at the upstream end of an annealing furnace 4.

**[Table 2]**

| | Feed Rate of SO₂ (m³/h) | Feed Rate of Air (m³/h) |
|---|---|---|
| Comparative Example 1 | 0 | 0 |
| Comparative Example 2 | 0.3 | 0.8 |
| Comparative Example 3 | 0.3 | 1.8 |
| Comparative Example 4 | 0.3 | 3 |
| Comparative Example 5 | 0.3 | 10 |
| Example 1 | 1 | 2.5 |
| Example 2 | 1 | 6 |
| Example 3 | 1 | 10 |

Incidentally, on the side of downstream from the buffer-layer formation device 11 inside the annealing furnace 4 adopted in Examples and Comparative examples, there were provided, though not illustrated in FIG. 1, five other buffer-layer formation devices (downstream-sided buffer-layer formation devices). Each of these five downstream-sided buffer-layer formation devices fed only SO₂ to the bottom surface 5a. In every Comparative Example and every Example, the same amount of SO₂ was fed from each of the downstream-sided buffer-layer formation devices, and the feed rate of SO₂ was 0.5 m³/h.

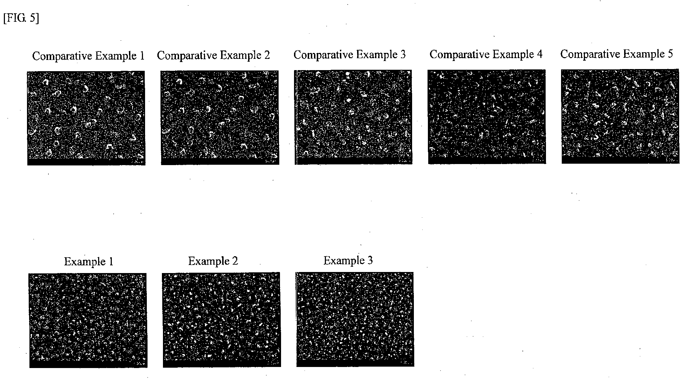

Each of the glass ribbons 5 having buffer layers formed in the foregoing manners on their bottom surfaces 5a was cut into desired sizes after annealing, and thereon S count measurement was made by using ZSX100e manufactured by Rigaku Corporation under the conditions listed in Table 1. In addition, each bottom surface 5a was observed under a scanning electron microscope SU-6600 manufactured by Hitachi High-Technologies Corporation. In Table 3 are given the S count of each bottom surface 5a and the median value of equivalent circle diameters R1 of a plurality of sulfate crystals 17 observed from the thickness direction, and in FIG. 5 are shown electron photomicrographs of bottom surfaces 5a. A plurality of white particulate substances in FIG. 5 are sulfate crystals 17.

**[Table 3]**

| | S Count (kcps) | Median Value of Equivalent Circle Diameters R1 (nm) |
|---|---|---|
| Comparative Example 1 | 6.3 | 532 |
| Comparative Example 2 | 6.6 | 550 |
| Comparative Example 3 | 6.9 | 416 |
| Comparative Example 4 | 7 | 395 |
| Comparative Example 5 | 7.9 | 437 |
| Example 1 | 7.5 | 346 |
| Example 2 | 8 | 299 |
| Example 3 | 8.1 | 262 |

From Tables 2 and 3, it is apparent that there is a tendency for the S count to increase with the increases in SO₂ feed rate and air feed rate of the buffer-layer formation device 11. Since the S count is preferably 6 kcps or higher as mentioned above, such a condition is fulfilled in Comparative Examples 1 to 5 as well as in Examples 1 to 3. On the other hand, it is apparent that in every Comparative Example where the SO₂ feed rate was lower than that in every Example, the median value of equivalent circle diameters R1 of a plurality of sulfate crystals 17 was greater than 350 nm, which were unsuitable. Thus, it has been discovered that reduction in median value of equivalent circle diameters R1 requires both SO₂ and air to be fed at high feed rates.

In the next place, after the buffer layer on each bottom surface 5 a was removed by washing, etching treatment using an aqueous solution containing hydrofluoric acid (HF) was carried out. To be more specific, the etching treatment was carried out by using an etching solution containing 2% of HF and 18% of HCl for 30 seconds at room temperature.

The arithmetic mean roughness Sa and the maximum valley depth V of each bottom surface 5a having undergone the etching treatment were measured by using VertScan 2.0 (Model R5500HM) manufactured by Ryoka Systems Inc., using a 50X objective lens and adopting Phase mode. In addition, the median value of equivalent circle diameter R2 of a plurality of altered areas 19 in each bottom surface 5a was mesured through detection of recesses 20 formed in each bottom surface 5a by using an atomic force microscope (AFM). Measurement results thus obtained are shown in Table 4.

**[Table 4]**

| | Sa (nm) | V (nm) | Median Value of Equivalent Circle Diameters R2 (nm) of Altered Areas | White Cloudiness |
|---|---|---|---|---|
| Comparative Example 1 | 1.12 | 7.1 | 614 | present |
| Comparative Example 2 | 1.49 | 9.3 | 704 | present |
| Comparative Example 3 | 1.47 | 8.1 | 599 | present |
| Comparative Example 4 | 1.47 | 7.5 | 448 | present |
| Comparative Example 5 | 1.56 | 8.5 | 532 | present |
| Example 1 | 0.75 | 5.1 | 334 | absent |
| Example 2 | 0.72 | 4.5 | 345 | absent |
| Example 3 | 0.94 | 5.3 | 311 | absent |

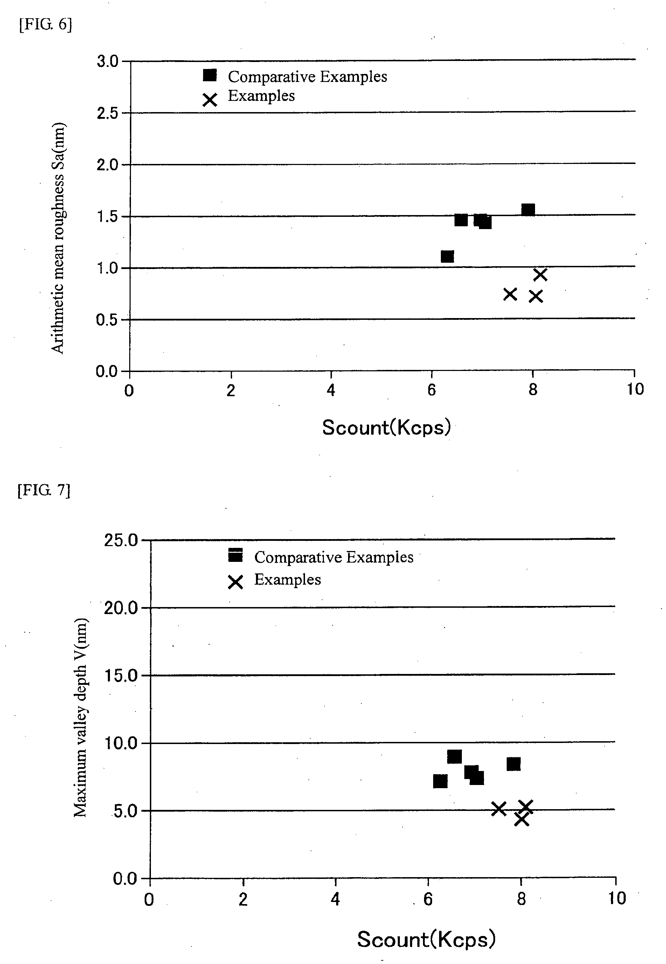

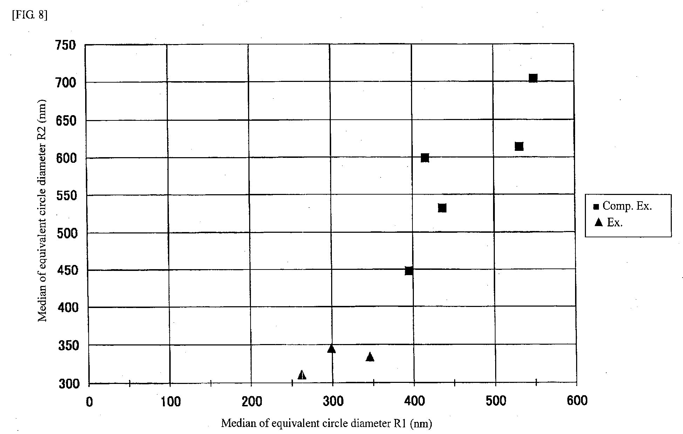

Furthermore, a graph showing relationships between S count and arithmetic mean roughness Sa is shown in FIG. 6, a graph showing relationships between S count and maximum valley depth V is shown in FIG. 7, and a graph showing relationships between median value of equivalent circle diameters R1 of a plurality of sulfate crystals 17 and median value of equivalent circle diameters R2 of a plurality of altered areas 19 is shown in FIG. 8.

In Comparative Examples 1 to 5 each, the median value of equivalent circle diameters R1 of a plurality of sulfate crystals 17 was greater than 350 nm, accordingly the median value of equivalent circle diameters R2 of a plurality of altered areas 19 became greater than 400 nm. As a result, the sizes of recesses 20 formed after etching treatment were increased, and the arithmetic mean roughness Sa became greater than 1.1 nm and the maximum valley depth V became greater than 7.0 nm. And white cloudiness was observed in the bottom surface 5a.

In contrast, in Examples 1 to 3 each, the median value of equivalent circle diameters R1 of a plurality of sulfate crystals 17 was 350 nm or smaller, accordingly the median value of equivalent circle diameters R2 of a plurality of altered areas 19 became 400 nm or smaller. As a result, the sizes of recesses 20 formed after etching treatment were reduced. Accordingly, the arithmetic mean roughness Sa became smaller than 1.1 nm and the maximum valley depth V became smaller than 7.0 nm, and no white cloudiness was observed.

By the way, because O₂ inside the annealing bath 4 is reduced by conversion into H₂O due to H₂ being blown from the outlet 15 of the float bath 2 into the annealing furnace 4, with consideration given to this decrement of O₂, the air feed rate from the buffer-layer formation device 11 has been adjusted as appropriate. To be more specific, when H₂ blown into the annealing furnace 4 is low in amount, so far as the air feed rate is made low as compared with those in Examples 1 to 3, it is possible to attain similar effects.

The present application is based on Japanese Patent Application No. 2014-127268, filed on June 20, 2014, the contents of which are incorporated herein by reference.

### DESCRIPTION OF REFERENCE NUMERALS AND SIGNS

- 1: Glass plate manufacturing apparatus
- 2: Float bath
- 3: Dross box
- 4: Annealing furnace
- 5: Glass ribbon
- 5a: Bottom surface
- 5b: Top surface
- 6: Conveying tool
- 7: Lift-out roller
- 8: Lehr roller
- 9: Molten metal
- 10: Inlet
- 11: Buffer-layer formation device
- 12: SO₂ feed section
- 13: Air feed section
- 15: Outlet
- 16: Tarnish layer
- 17: Crystal
- 18: Intermediately-formed salt
- 19: Altered area
- 20: Recess

## Claims

1. A glass plate having a buffer layer comprising a plurality of sulfate crystals on a bottom surface which is brought into contact with a molten metal during formation in accordance with a float method,
wherein the plurality of sulfate crystals have a median value of equivalent circle diameters of 350 nm or smaller as observed from a thickness direction.

2. A glass plate having a plurality of altered areas higher in etching rate than other portions on a bottom surface which is brought into contact with a molten metal during formation in accordance with a float method,
wherein the plurality of altered areas have a median value of equivalent circle diameters of 400 nm or smaller as observed from a thickness direction.

3. A method for manufacturing a glass plate, comprising a process of forming a buffer layer comprising a plurality of sulfate crystals on a bottom surface which is brought into contact with a molten metal during formation in accordance with a float method,
wherein the plurality of sulfate crystals have a median value of equivalent circle diameters of 350 nm or smaller as observed from a thickness direction.

4. The method for manufacturing a glass plate according to Claim 3, further comprising a process of washing the bottom surface to remove the buffer layer,
wherein the bottom surface has a plurality of altered areas higher in etching rate than other portions and
the plurality of altered areas have a median value of equivalent circle diameters of 400 nm or smaller as observed from the thickness direction.

5. The method for manufacturing a glass plate according to Claim 4, further comprising a process of etching the bottom surface by an aqueous solution containing hydrofluoric acid,
wherein the bottom surface has an arithmetic mean roughness of 1.1 nm or smaller and a maximum valley depth of 7.0 nm or smaller.
